# EUROPEAN PATENT APPLICATION

(11) **EP 1 615 371 A2**
(43) Date of publication of application: **11.01.2006**
(21) Application number: 05014513.5
(22) Date of filing: 05.07.2005
(51) Int. Cl.: H04L 9/32

(54) **System of management and communication by electronic signature**

(30) Priority: 06.07.2004 ES 200401642
(71) Applicant: Ferrer Serrano, Roberto Luis, C.P. 50001 Zaragoza (ES)
(72) Inventor: Ferrer Serrano, Roberto Luis, C.P. 50001 Zaragoza (ES)
(74) Representative: Pons Arino, Angel

(57) **Abstract**

System of management and communication by electronic signature.
System of management and communication using electronic signature, that is profitable to make easy the internal communication among the members of an organization allowing to have an reliable communication and with the level of confidentiality desired by communication's issuer, including the system (1) a way of access based in a chip that stores, at least, two private keys of electronic signature, as well as an computerized device (4) for the management and communication among the members of the organization, of documents, information or messages electronically signed, so that by means of the introduction of a first private key (5) of electronic signature, the issuer member signatory of the document provides evidence of his/her real identity (7), and by means of the introduction of a second private key (6) of electronic signature, the issuer member, signatory of the document, provides evidence of identity as a member (8) of the organization, but no personally.

## Description

### THE AIM OF THE INVENTION

The following invention, according to it is expressed in the enunciate of the present descriptive memory, is referred to a system of management and communication using electronic signature, it is profitable to make easy the internal communication inside an organization or company allowing to have a reliable communication and with the level of confidentiality desired by the issuer of a communication, message or information, allowing also to have real knowledge of the identity of the informant, or not.

The system is based on a device, element or means, based in a chip that incorporates, at least, two private keys of electronic signature, fulfilling the rules about electronic advanced signature.

In that way, by means of the private utilization of a first private key by the transmitter of the correspondent communication, message or information will allow him to communicate and to assume his/her real identity, while with the utilization of a second private key it will be permitted that the transmitter of a communication, message or information provides evidence of identity as related to the organization, but without a real identification of himself.

### SPECIFIC FIELD

In the present memory a system of management and communication by electronic signature itself is described, which is of special application for the internal communication inside an organization, comprising the legal, syndical and social labour area of the relations between companies and their workers, and, in general, the relations of an organization and its members.

### BACKGROUND OF THE INVENTION

So far, does not exist a specific mechanism of electronic reliable communication between the direction of a company or organization and its workers or members, that has a legal direct recognition, and besides, was independent of the single will of one of the parties.

The systems of internal electronic messengers through which the memorandums circulate using the company's network can not be directly guaranteed by a legal rule and its reliability or its legal support, and hence their validity as evidence in a trial, will come, only, derived of a series of different factors not related to a legal concrete rule.

The reason of the above mentioned is that being information that circulates by computing network, that it is controlled by the company, the possibility for this company to modify or to repudiate the information that circulates for the aforementioned computing network can not be avoided.

Only the utilization of systems of electronic advanced signature and according to the inforced law of electronic signature, will have the necessary grade of reliability and hence direct evidential capability.

So far, only digital certificates discharged directly in the computer, or implantation of cards, that contain a chip in which the private key of an advanced electronic signature system are placed and that are read through a card reader, are being used.

In order to avoid the inconvenient above mentioned the utilization of the electronic signature, even in its advanced mode, such and as it takes effect at the present moment, neither fulfill the needs of communication within an organization, because in many instances, the direction can not offer a degree of confidentiality that guarantees the anonymity of those that send a communication whose addressee is the organization's Direction.

On the other hand, it has not been taken into account properly that confidentiality in the communications in the company, specially in those related to the ones that refer to the direction with the employees, is so important as the communications in which is definitely known accurately who are the transmitters and receivers of the messages.

Besides, it must be taken into account that the labour relationship is characterized for the subordination and the dependence of one of the parties regarding to the other one, and that factors that the logical relation of power would impede a sincere answer if confidentiality wouldn't exist.

In this way, to have a system that enables the management of the organizational identity is essential inside the company.

Definitively, the matter is to have a tool, that in legal, easy, simple, fast and safe way, may allow to know and to examine the individual and group perceptions, as well as the results (labour satisfaction) regarding the dimensions that may have an effect on the behaviour and elements of the overtaking, leadership, processes, structure, system of electronic vote, etc.

### DESCRIPTION OF THE INVENTION

In order to solve all of the aforementioned inconveniences the present memory describes a system of management and communication by electronic signature itself, being profit to make easy the internal communication between the members of an organization or company, allowing to have an reliable signatory of a communication, message or information, so that the system is based in a chip that stores, at least, two private keys of electronic signature, as well as an information system for the management and communication between members of the organization about documents, reports or messages signed electronically.

That way, by the introduction of a first private key of electronic signature the emitter member signatory of the document, message or information, provides personally evidence of his/her identity, whereas by means of a second introduction of a private key of electronic signature the emitter member, signatory of the document, message or information provides evidence of identity as a member of the organization but not with his/her personal identity.

Definitively the purpose is that the different members of an organization or company contained in a data base of the system, may have a communication among themselves that may allow to know who is the member of the organization provides or asks for a documentation, message or information, or else that it allow not knowing who is the member that you provide or you request a documentation, a message or an information.

On the other hand, the members of the organization will utilize pseudonyms in the electronic certificate, whose pseudonyms will be contained in a data base of the system, not disclosed to the organization, being acknowledged as a member of the organization by the system of management and communication, but not informant his/her personal recognition, neither no other data of this information .

That is to say, the direction of the organization or any other member in an unilateral way, won't be able to know the pseudonyms utilized by the different members of the organization but exceptions legally foreseen.

In this way, for the management and communication of documents, messages or reports that are supposed to have a secret character, the members of the organization by the introduction of the first private key of electronic signature are identified personally, and, later on, once validated for the system, by means of the introduction of second private key of electronical signature, they provide evidence of identity, only, as a member of the organization, for on the basis of this second identification, provide the document, message or secret information desired, forbidding that the system allows to know the broadcasting member's personal identification.

This execution is of especial utility when voting, since the system will allow knowing the members that have voted, but not the exercised vote, granted that the vote gets masked by the previous introduction of second private key of electronic signature.

Besides, when the members of the organization only should provide a document, message or information of secret character, the system, that does not allow knowing the personal identity of the different broadcasting members of the document, message or information, controls the access to the system of each member, allowing each one of the members, only, a document, message or information in relation to the concrete solicited theme.

That is to say, the system controls that the different members of the organization, only, may exercise once their right to vote, in the event of having to do with this option.

In order to complement the description that straightaway is going to take place, and in order to help a better understanding of the characteristics of the invention, to the present descriptive memory is attached a complete set of plans or drawings, in which on an illustrative way and no limitative, the most important characteristic's details of the invention are shown.

### BRIEF DESCRIPTION OF THE DESIGNS

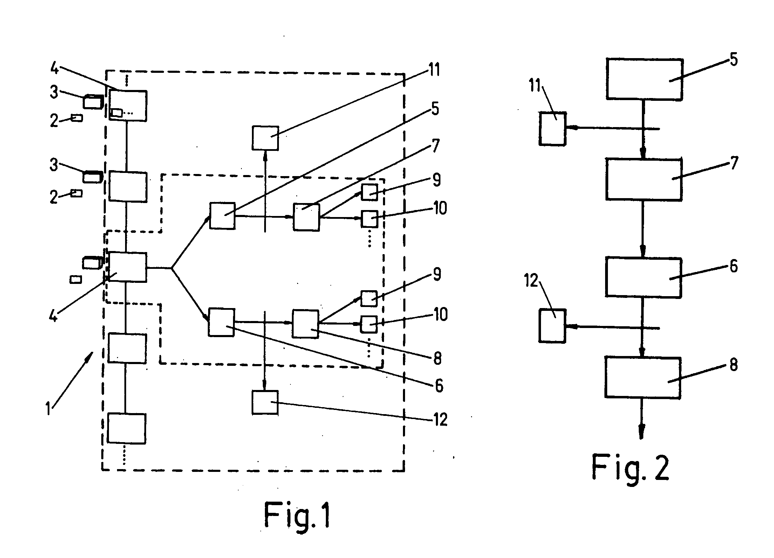

Figure 1. Shows a sight of a schematic diagram of the system of management and communication by electronic signature related to an organization with a network that has variable number of computer systems.
Figure 2. Shows a sight of a concrete realization of utility for the emission of secret information which is of especial application for votations.

### DESCRIPTION OF A PREFERRING REALIZATION

According to the sight of the commented figures and according to the adopted numbering, we can observe how the system of management and communication has some means of access device, in this case, defined by a card (2) provided with a chip that stores, at least, two private keys of electronic signature and a reader (3) of the aforementioned card (2), as well as an information technology system (4) for the management and communication between members of the organization by documents, reports or messages signed electronically.

This communication between members of an organization, contained in a data base of the system, of documents, messages or reports signed electronically will take effect in the way that is prescribed by the inforce law of electronic signature in its mode of electronic advanced signature, that is to say, based in a certificate recognized and generated by means of a safe device of creation of signature and obeying the rules of electronic signature.

In this way, once one has acceded to the system, the correspondent member of the organization by means of the introduction of a first private key, (5) of electronic signature, the signatory of the document, member of the organization, obtains an identification personal, (7) whereas by means of a second private key introduction (6) of electronic signature of the member of the organization signatory of the document obtains an identification (8) as a member of the organization but no his/her personal identity.

That way, the different members of the organization or company, will optionally be able to sign their communications with an or another key, according to their desire.
Logically, the different members of the organization will be contained in a database of the system (11), for their perfect identification, and the pseudonyms utilized by the different members of the organization, equally, will be contained in a data base (12) of the system for their comparison and checking, being the authority of certification the one that has to its disposal the aforementioned data bases (11) and (12).

That way, the members of the organization will be able to sign with an or another private key (5) or (6) to their election by the introduction of a sequence of at least four digits that only the signatory broadcasting member will know, and that it is the standard habitually utilized in this type of cards, but presenting the advantage to be able to elect between two private keys of electronic signature.

Once the personal identification of a member of the organization has been produced (7), or else the identification (8), only, as a member of the organization, through his/her pseudonym, but without knowing his/her personal identity, it will be able to proceeded to perform on (9) the way desired, that is to say, to accede to certain programs, to request information (10), accomplishing certain petitions to the direction of the organization, etc.

The members of the organization will utilize pseudonyms in the electronic certificate, no revealable to the organization, except the suppositions legally established, being recognized as members of the organization by the system of management and communication, but no informant his/her personal identity, neither no other data of information of them.

The difference of these private keys is that the functioning of the first of them, will obey the standards habitually utilized in this type of cards that right now exist on the market and will identify directly the signatory of the document or communication, whereas the second key will allow his/her identification as a member of the organization or company but it will not allow knowing his/her real identity.

The signatory member's public key will be related to his/her private key, in such a way that this personal recognition will be impeded, although it will allow to identify him as a member of the organization. To achieve that, the consignment of a pseudonym in the electronic certificate, may be preferentially used, even though in such a case and with the object to fulfill the inforced rules about electronic signature, the lender of services of certification will have to include the correspondent foresight in his/her declaration of certification practices, in which it will have to consign that the revelation of the ownership of the person, member of the organization, that acts by means of a pseudonym, is not going to see his/her identity revealed, because of the company or organization's unilateral decision.

The system (1) of management and communication acquires a great relevance when any type of information of secret character has to be used, so that the members of the organization by the introduction of the first private key (5) of electronic signature will provide personally, evidence of their identity, and later on, once (6) they are validated by the system, by means of the introduction of a second private key and an identification (8), only, as a members of the organization, so that on the basis of this second identification, contribute the document, message or desired secret information.

That way, the system does not allow relating the document, message or information of secret character contributed by the broadcasting member of the organization with his/her personal identification.

On the other hand, when the members of the organization only should contribute a document, message or information of secret character, the system, that does not allow knowing the personal identity of the different broadcasting members of the document, message or information, controls the access system of every one of the members, allowing each one of them, only, to contribute a document, message or information in relation to the concrete solicited theme, being this practical realization of especial relevance in case of votations, because, the system will control which members of the organization have voted, but no he option exercised that remains totally secret.

Besides, the system controls that the right to vote, in his/her case, may be exercised only once for each one of the different members of the organization.

Means or device of access to the system, with the object of the identification in the required way, can be materialized for different others to a card and a reader, like, for example, a mobile telephone, as far as, all those that allow to contain, at least, two private keys of electronic signature, will be valid.

The system can envisage the possibility that the members of the organization, identifiable or not, may obtain a justification printed of his/her participation in any type of consultation, included in it or not, the remitted data to the direction or applicant of the consultation.

On the other hand, the system of management and labour communication by electronic signature, must cover up three areas, at the very least.

Legal; To the object to envisage the rights of meeting and vote to effects of syndical elections that are established in a inforced Statute of the Workers or applicable law.

Syndical; To the object to contemplate the obligations of communication between the organization or company and the representatives of the workers, in case that representation exists .

Social Labour; To the object to contemplate the different needs of communication between the company and his/her workers.

That way, it must be taken into account that the aforementioned communication can take effect of vertical and bidirectional mode, that is:
Direction- Workers and vice versa;
Direction- Direction;
Workers- Workers;
Direction -Direction- Workers;
Workers- Workers -Direction;
Workers-Workers- Direction -Direction.

Taking into account that in order to enable the system to manage in an efficacious way the information that circulates in the circuit that has been established, the system will guarantee the level of confidentiality suitable not only for the remitter, as also for the contents in the several counselling systems that the company wants to utilize in each moment.

Among those enquiry systems, it can be remarked the remission of questionnaires, to the object that the employee or member of the organization may:
- Respond with one or you vary answers for a simple or multiple issue.
- Qualify one or you vary proposals coming from the Direction.
- Remit a free message of a length decided by the direction in order to report facts, to make notices or proposals of improvements in the productive system or others.
- Participation at forums and campaigns of electronic vote so that the worker can sign with his/her private key and may also take part in permanent or punctual opinion polls on themes of concern of the company.

## Claims

1. System of management and communication by electronic signature, being profitable to make easy the internal communication between the members of an organization, allowing to have an reliable communication, and with the level of confidentiality desired by communication's emitter, **characterized** because the system (1) includes access means based in a chip that stores, to at least, two private keys of electronic signature, as well as an information-technology system (4) for the management and communication between members of the organization of documents, reports or messages signed electronically, so that by means of the introduction of a first private key (5) of electronic signature the transmitter member, signatory of the document, will provide personally evidence of his/her identity (7), while by means of the introduction of a second private key of electronic signature , (6) the transmitter member signatory of the document, is identified as member (8) of the organization, but not his/her personal identity.

2. System of management and communication by electronic signature, according to claim 1, **characterized** because the members of the organization will utilize pseudonyms in the electronic certificate, no revealable to the organization, being acknowledged as members ( 8 ) of the organization by the system of management and communication, but no informant his/her personal recognition, neither no other data of information of themselves.

3. System of management and communication by electronic signature, according to claim 1, **characterized** because for the management and communication of documents, messages or reports that are supposed to have a secret character, the members of the organization by the introduction of a first private key (5) of electronic signature, identify themselves personally (7), and, later on, once validated by the system, by means of their comparison with a data base (11) of the system by means of the introduction of second private key (6), of electronic signature, they provide evidence of identity, only, as members of ( 8) the organization, so that on the basis of this second identification, contribute the document, message or secret information desired, without allowing the system to know the transmitter's member's personal identification.

4. System of management and communication by electronic signature, according claim 3, **characterized** because when the members of the organization only should contribute a document, message or information of secret character, the system, that does not allow knowing the personal identity of the different transmitter members of the document, message or information, controls the access to the system of each one of the members, allowing each one of them, only a document, message or information in relation to the concrete solicited theme.

5. System of management and communication by electronic signature, according to claim 1, **characterized** because the means of access to the system can be described by a (2) card endowed with a chip, with at least, two private keys of electronic signature and a reader (3) of cards.

6. System of management and communication by electronic signature, according to claim 1, **characterized** because the means of access to the system can be defined by a mobile telephone.
